(19) **Europäisches Patentamt / European Patent Office / Office européen des brevets**

(11) **EP 4 361 870 A1**

(12) **DEMANDE DE BREVET EUROPEEN**

(43) Date de publication:
**01.05.2024 Bulletin 2024/18**

(21) Numéro de dépôt: **23205400.7**

(22) Date de dépôt: **24.10.2023**

(51) Classification Internationale des Brevets (IPC):
**G06F 21/62** (2013.01)        **H04L 9/40** (2022.01)

(52) Classification Coopérative des Brevets (CPC):
**G06F 21/6209; H04L 63/0428**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **25.10.2022 FR 2211054**

(71) Demandeur: **Piepacker Inc**
**Walnut, CA 91789 (US)**

(72) Inventeurs:
- **TESTARD, Jules**
  **75020 Paris (FR)**
- **MEZZATESTA, Luca**
  **10141 Turin (IT)**

(74) Mandataire: **Germain Maureau**
**12, rue Boileau**
**69006 Lyon (FR)**

(54) **PROCÉDÉS D AFFICHAGE SUR UNE INTERFACE DE SORTIE D'UN ÉQUIPEMENT INFORMATIQUE D'UN OBJET GRAPHIQUE TRIDIMENSIONNEL ET DE CHIFFREMENT D'UN MODÈLE INITIAL D'UN OBJET GRAPHIQUE TRIDIMENSIONNEL**

(57)     La présente invention concerne un procédé d'affichage sur une interface de sortie (13) d'un équipement informatique (1) d'un objet graphique tridimensionnel, caractérisé en ce qu'il comprend la mise en oeuvre, par des moyens (11a, 11b) de traitement de données d'un équipement informatique (1) d'étapes de :
(a) Obtention d'un modèle chiffré dudit objet graphique tridimensionnel ;
(b) Application au modèle chiffré d'au moins une transformation géométrique paramétrisée par une clé privée de déchiffrement associée audit objet graphique tridimensionnel, de sorte à obtenir un modèle déchiffré dudit objet graphique tridimensionnel ;
(c) Mise en oeuvre d'un algorithme de rendu dudit modèle déchiffré.

FIG. 2

EP 4 361 870 A1

**Description**

DOMAINE TECHNIQUE GÉNÉRAL

La présente invention se rapporte au domaine de l'infographie tridimensionnelle. Plus précisément, elle concerne des procédés d'affichage sur une interface de sortie d'un équipement informatique d'un objet graphique tridimensionnel, et de chiffrement d'un modèle initial d'un objet graphique tridimensionnel

ETAT DE L'ART

On a aujourd'hui la capacité de générer et rendre des objets graphiques tridimensionnels en les plaçant par exemple dans une scène virtuelle, ou en réalité augmentée. On obtient des images informatiques de synthèse, qui présentent un réalisme croissant.

Des objets graphiques tridimensionnels peuvent à ce titre avoir une valeur et être par exemple vendus par des infographistes à des utilisateurs.

Il est cependant courant que de tels objets graphiques soient piratés et diffusés sur internet, ce qui les rend alors accessibles gratuitement par tout le monde.

Il est alors très difficile, d'un point de vue juridique, de faire respecter le droit d'auteur existant sur ces objets graphiques.

On connait par conséquent des techniques de chiffrement (AES, triple DES, etc.) où l'objet graphique est transmis chiffré à un utilisateur disposant d'une clé privée de chiffrement.

Les risques de piratage sont moindres, mais :

- Soit l'utilisateur peut, une fois que l'objet a été déchiffré, le manipuler comme il veut, mais alors il y a toujours le risque que l'objet soit diffusé sur internet en clair.
- Soit l'objet doit être manipulé chiffré, mais alors la gestion du déchiffrement peut être lourde en termes de ressources informatiques, rendant par exemple impossible une animation en temps réel.

On connait alternativement des techniques de transformation géométrique d'objets graphiques telles que décrites dans les documents US2012299915 ou US2017169232 mais elles s'avèrent soit peu obfuscantes (la forme générale de l'objet est gardée), soit complexes à mettre en oeuvre.

L'invention vient améliorer la situation.

PRÉSENTATION DE L'INVENTION

La présente invention se rapporte donc selon un premier aspect à un procédé d'affichage sur une interface de sortie d'un équipement informatique d'un objet graphique tridimensionnel, caractérisé en ce qu'il comprend la mise en oeuvre, par des moyens de traitement de données d'un équipement informatique d'étapes de :

(a) Obtention d'un modèle chiffré dudit objet graphique tridimensionnel ;
(b) Application au modèle chiffré d'au moins une transformation géométrique paramétrisée par une clé privée de déchiffrement associée audit objet graphique tridimensionnel, de sorte à obtenir un modèle déchiffré dudit objet graphique tridimensionnel ;
(c) Mise en oeuvre d'un algorithme de rendu dudit modèle déchiffré.

Selon d'autres caractéristiques avantageuses et non limitatives :
Ledit modèle déchiffré dudit objet graphique tridimensionnel est un premier maillage géométrique représentant ledit objet graphique tridimensionnel, et ledit modèle chiffré dudit objet graphique tridimensionnel est un deuxième maillage géométrique ne représentant pas ledit objet graphique tridimensionnel, chaque maillage géométrique étant consisté de faces et étant défini par un ensemble de points formant sommets desdites faces.

Ladite transformation géométrique transforme, lorsqu'elle est paramétrisée par une clé privée de déchiffrement associée audit objet graphique tridimensionnel, ledit ensemble de points définissant le deuxième maillage en l'ensemble de point définissant le premier maillage.

Ladite transformation géométrique comprend une transformation linéaire dans laquelle le vecteur des cordonnées spatiales de chaque point définissant le deuxième maillage est multiplié par une matrice de transformation 3x3 fonction de ladite clé privée de déchiffrement.

Ladite matrice de transformation est une matrice à diagonale strictement dominante normalisée.

Ladite transformation géométrique comprend :

- une première transformation élémentaire, transformant ledit ensemble de points définissant le deuxième maillage en un ensemble de point définissant un troisième maillage ne représentant pas ledit objet graphique tridimensionnel, et

- une deuxième transformation élémentaire, transformant ledit ensemble de points définissant le troisième maillage en l'ensemble de point définissant le premier maillage.

Ladite deuxième transformation élémentaire est une transformation de brouillage dans laquelle chaque cordonnée spatiale de chaque point définissant le troisième maillage est multiplié par une fonction périodique paramétrisée par une normale au troisième maillage en ledit point.

Lesdits moyens de traitement de données de l'équipement comprennent un processeur et une carte graphique, les étapes (b) et (c) étant réalisées à la volée par la carte graphique.

Un modèle initial dudit objet graphique tridimensionnel est stocké par un serveur connecté audit équipement informatique, le procédé comprenant une étape préalable (a0), mise en oeuvre par des moyens de traitement de données du serveur, d'application au modèle initial d'au moins une transformation géométrique inverse de ladite transformation géométrique paramétrisée par la clé privée de déchiffrement associée audit objet graphique tridimensionnel, de sorte à obtenir le modèle chiffré dudit objet graphique tridimensionnel ; l'étape (a) comprenant la transmission dudit modèle chiffré du serveur (2) à l'équipement.

L'étape (a0) comprend préalablement l'application d'une empreinte numérique unique audit modèle initial.

Ladite clé privée de déchiffrement est celle d'un utilisateur autorisé par le serveur (2) à afficher ledit objet graphique tridimensionnel, ladite empreinte numérique unique étant l'empreinte numérique dudit utilisateur.

L'application d'une empreinte numérique audit modèle initial comprend l'insertion d'un identifiant unique dans des métadonnées dudit modèle initial ou l'ajout au modèle initial d'un maillage géométrique invisible unique.

Selon un deuxième aspect, l'invention concerne un procédé de chiffrement d'un modèle initial d'un objet graphique tridimensionnel, caractérisé en ce qu'il comprend la mise en oeuvre, par des moyens de traitement de données d'un serveur d'étapes de :

(a0) Application au modèle initiale d'au moins une transformation géométrique inverse d'une transformation paramétrisée par une clé privée de déchiffrement associée audit objet graphique tridimensionnel, de sorte à obtenir un modèle chiffré dudit objet graphique tridimensionnel.

Selon un troisième et un quatrième aspect, l'invention concerne un produit programme d'ordinateur comprenant des instructions de code pour l'exécution d'un procédé selon le premier aspect d'affichage sur une interface de sortie d'un équipement informatique d'un objet graphique tridimensionnel ou selon le deuxième aspect de chiffrement d'un modèle initial d'un objet graphique tridimensionnel, lorsque ledit programme est exécuté sur un ordinateur ; et un moyen de stockage lisible par un équipement informatique sur lequel est enregistré un produit programme d'ordinateur comprenant des instructions de code pour l'exécution d'un procédé selon le premier aspect d'affichage sur une interface de sortie d'un équipement informatique d'un objet graphique tridimensionnel ou selon le deuxième aspect de chiffrement d'un modèle initial d'un objet graphique tridimensionnel.

## PRÉSENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

[Fig. 1]La figure 1 représente une architecture dans lequel sont mis en oeuvre les procédés selon l'invention
[Fig. 2]La figure 2 illustre les étapes d'un mode de réalisation préféré des procédés selon l'invention

## DESCRIPTION DÉTAILLÉE

*Architecture*

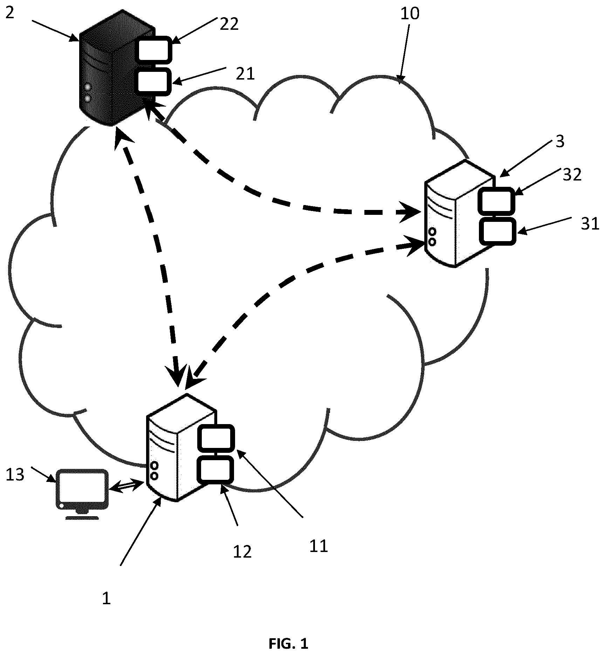

En référence à la [Fig. 1], la présente invention concerne un procédé d'affichage sur une interface de sortie 13 d'un équipement informatique 1 d'un objet graphique tridimensionnel.

Selon un mode de réalisation préféré, l'affichage dudit objet graphique tridimensionnel comprend son incrustation dans un flux vidéo en particulier filmé (i.e. en réalité augmentée), typiquement de sorte à « habiller » un utilisateur, par exemple dans une visioconférence ou une partie multijoueur. Ledit objet graphique tridimensionnel est ainsi par exemple un masque, un chapeau ou un autre élément cosmétique d'habillage (ce que l'on appelle un « skin »), dans la mesure où ces éléments d'habillage ont généralement une valeur marchande.

Ainsi, de manière connue, si l'utilisateur change de position, l'affichage de l'objet graphique tridimensionnel est adapté en temps réel. L'affichage peut mettre prendre en compte certains mouvements de l'utilisateur, par exemple s'il parle sa bouche bouge et une bouche virtuelle d'un masque peut être animée de manière synchronisée

Naturellement l'invention pourra s'appliquer à tout objet graphique tridimensionnel dont l'affichage sécurisé est souhaité.

L'équipement informatique 1 peut être tout terminal tel qu'un ordinateur personnel, une tablette, un smartphone etc. Ce dernier comprend des moyens de traitement de données 11a, 11b, des moyens de stockage de données 12, i.e. une mémoire, par exemple flash, et présente une interface de sortie 13, i.e. des moyens d'affichage tel qu'un écran ou un projecteur, mais également un casque de réalité virtuelle.

De manière préférée lesdits moyens de traitement de données 11a, 11b de l'équipement 1 comprennent un processeur 11a (un CPU) et une carte graphique 11b (un GPU). On suppose que de manière classique la carte graphique 11b gère l'affichage sur l'interface de sortie 13, i.e. qu'elle est capable de mettre en oeuvre un algorithme de rendu de données fournies par le processeur 11a.

De manière préférée l'équipement 1 est connecté à un serveur de contrôle 2 et/ou un serveur de contenu 3 (un CDN), en particulier via un réseau 10 tel qu'internet.

*Principe*

Le présent procédé permet de manipuler facilement un objet graphique tridimensionnel dans l'état chiffré, en utilisant comme algorithme cryptographique une transformation géométrique paramétrisée par une clé privée de déchiffrement associée de manière unique audit objet graphique tridimensionnel, au lieu des algorithmes traditionnels tels que AES.

On définit un modèle déchiffré dudit objet graphique tridimensionnel et un modèle chiffré dudit objet graphique tridimensionnel, qui peuvent être l'un comme l'autre rendus par la carte graphique (typiquement le modèle déchiffré est un premier maillage géométrique et le modèle chiffré un deuxième maillage géométrique, chaque maillage géométrique étant consisté de faces et étant défini par un ensemble de points formant sommets desdites faces), tels que ledit modèle chiffré représente ledit objet graphique tridimensionnel (i.e. son rendu à un aspect attendu, par exemple un masque) mais le modèle chiffré ne représente pas ledit objet graphique tridimensionnel (et en général il représente un objet informe et distordu).

Ladite transformation géométrique permet de passer du modèle chiffré au modèle chiffré (et inversement par une transformation « inverse » - en particulier la clé de déchiffrement sert également de clé de chiffrement dans une logique de « chiffrement symétrique » voir plus loin), à condition d'utiliser la bonne clé. En particulier, ladite transformation géométrique transforme, lorsqu'elle est paramétrisée par ladite clé privée de déchiffrement associée audit objet graphique tridimensionnel, ledit ensemble de points définissant le deuxième maillage en l'ensemble de point définissant le premier maillage.

Si une autre clé que la clé privée de déchiffrement associée audit objet graphique tridimensionnel est utilisée (par exemple celle associée à un autre objet graphique tridimensionnel), alors on n'atteint pas le modèle déchiffré de l'objet graphique tridimensionnel, mais un autre modèle « mal déchiffré » qui ne représente toujours pas ledit objet graphique, de sorte qu'on obtient le modèle déchiffré par application au modèle chiffré de ladite transformation géométrique si et seulement si elle est paramétrisée par la (bonne) clé de déchiffrement associée audit objet graphique tridimensionnel

Pour reformuler, le modèle chiffré de l'objet graphique tridimensionnel est une version « brouillée » du modèle déchiffré qui représente l'objet graphique tridimensionnel, les deux modèles pouvant être rendus indifféremment et affichés sur l'interface de sortie 13 (ce qui également le cas de tout modèle « mal déchiffré » par l'utilisation d'une mauvaise clé).

Cela signifie que le modèle chiffré de l'objet graphique tridimensionnel reste un modèle d'objet graphique tridimensionnel lisible par la carte graphique 1b et que son déchiffrement (application de la transformation géométrique) est une opération graphique qui peut être faite assez simplement directement dans la carte graphique 1b.

*Procédé*

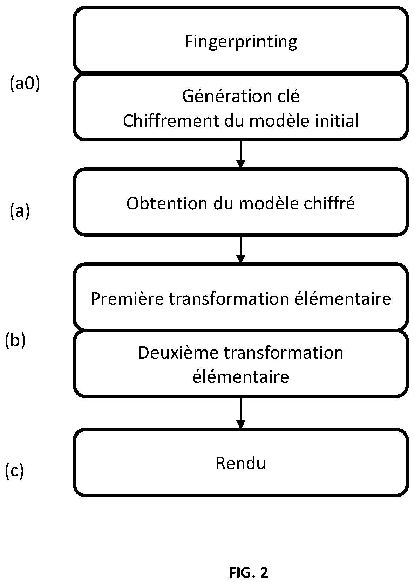

En référence à la [Fig. 2], le présent procédé est mis en oeuvre par les moyens 11a et/ou 11b de traitement de données de l'équipement informatique 1, et commence par une étape (a) d'obtention du modèle chiffré dudit objet graphique tridimensionnel. On suppose que l'équipement 1 dispose de ladite clé privée de déchiffrement associée audit objet graphique tridimensionnel.

L'étape (a) peut comprendre la transmission dudit modèle chiffré d'un serveur de contrôle 2 et/ou d'un serveur de contenu 3 l'équipement 1, mais le modèle chiffré peut tout simplement être stocké dans la mémoire 12 de l'équipement 1. Dans le premier cas, l'étape (a) peut comprendre préalablement la requête par l'équipement 1 (par exemple déclenchée par le fait que l'utilisateur demande l'affichage de l'objet graphique tridimensionel) de vérification auprès du serveur 2 que la clé privée est valide : si c'est le cas, le modèle chiffré dudit objet graphique tridimensionnel lui est transmis pour déchiffrement et affichage.

Dans une étape (b) principale, au moins une transformation géométrique paramétrisée par une clé privée de déchiffrement associée audit objet graphique tridimensionnel est appliquée au modèle chiffré, de sorte à obtenir un modèle déchiffré dudit objet graphique tridimensionnel.

Enfin à l'étape (c) est mis en oeuvre un algorithme de rendu classique dudit modèle déchiffré de sorte à l'afficher sur l'interface de sortie 13.

Comme expliqué les étapes (b) et (c) peuvent être réalisées à la volée par la carte graphique 11b (l'étape (a) reste réalisée par le processeur 11a).

*Transformation(s)*

Comme l'on verra, ladite transformation géométrique comprend une ou plusieurs transformations élémentaires, mais de manière préférée la transformation géométrique comprend au moins une transformation dite linéaire (i.e. une première transformation élémentaire) dans laquelle le vecteur des cordonnées spatiales de chaque point définissant le deuxième maillage est multiplié par une matrice de transformation 3x3 fonction de ladite clé privée de déchiffrement.

Ce type de transformation est du produit matriciel et peut donc être très facilement mis en oeuvre notamment par les cartes graphiques (et donc mis en oeuvre à la volée en temps réel) tout en étant suffisamment déformante pour que l'objet soit obfusqué.

En particulier, pour chaque point du deuxième maillage (modèle chiffré), on multiplie le vecteur $V_2$ de ses coordonnées par l'inverse de ladite matrice de transformation M et on obtient le vecteur $V_{2'}=V_2*inv(M)$. A noter que si ladite transformation géométrique consiste uniquement en ladite transformation linéaire (i.e. il n'y a pas d'autres transformation), alors on a $V_{2'}=V_1$ le point correspondant du premier maillage (modèle déchiffré).

A ce titre ladite matrice de transformation est préférentiellement une matrice à diagonale strictement dominante (c'est-à-dire que le module de chaque terme diagonal est supérieur à la somme des modules des autres termes de sa ligne) normalisée. En effet il est garanti qu'une matrice à diagonale strictement dominante est inversible. Le fait qu'elle soit normalisée permet que la transformation conserve le volume global.

La matrice M pourra être obtenue à partir de la clé (et le cas échéant précalculée par les moyens de traitement 11, 11b et en particulier le processeur 11a) par toute méthode apportant suffisamment d'entropie pour qu'il soit très difficile de remonter à la clé.

Par exemple on pourra appliquer la technique suivante :

- On prend le code ascii de 9 éléments de la clé (par exemple les 9 derniers caractères), à valeur dans [0, 255], notés $a_0$, $a_1$ ... as, i.e. $a_{i,i\in[0;8]}$ ;
- On applique une puissance p (par exemple $p\geq3$) pour augmenter la distorsion, i.e. $b_{i,i\in[0;8]}=a_i^p$ (on note qu'on pourra augmenter la dispersion de nombreuses autres façons alternatives comme des inversions, un logarithme, etc.) ;
- Les termes $b_i$ peuvent être disposés d'une façon ou d'une autre dans une matrice B (qui n'est pas encore la matrice

$$B = \begin{bmatrix} b_0 & b_1 & b_2 \\ b_3 & b_4 & b_5 \\ b_6 & b_7 & b_8 \end{bmatrix}$$

de transformation M), par exemple

- On la rend par construction strictement diagonale en ajoutant à chaque élément diagonale la somme des autres éléments de sa ligne (ou de sa colonne) +1, i.e. $B'$ =

$$\begin{bmatrix} b_0 + b_1 + b_2 + 1 & b_1 & b_2 \\ b_3 & b_3 + b_4 + b_5 + 1 & b_5 \\ b_6 & b_7 & b_7 + b_8 + b_9 + 1 \end{bmatrix}$$
. On vérifie que $b_0 + b_1 + b_2 + 1 > b_1 + b_2$ (et identiquement pour les autres lignes) puisque les $b_i$ sont positifs

- Enfin on la normalise par en divisant chaque terme par l'élément diagonal le plus élevé (ou la moyenne des éléments diagonaux), i.e. $M=B'/max(b'_{ii})$

Selon un mode de réalisation préféré, on ne se contente pas d'une seule transformation, i.e. ladite transformation géométrique comprend :

- une première transformation élémentaire, transformant ledit ensemble de points définissant le deuxième maillage en un ensemble de point définissant un troisième maillage ne représentant pas ledit objet graphique tridimensionnel, et

-   une deuxième transformation élémentaire, transformant ledit ensemble de points définissant le troisième maillage en l'ensemble de point définissant le premier maillage.

En d'autres termes, le modèle chiffré subit la première transformation élémentaire puis la deuxième transformation élémentaire (en tant que transformation supplémentaire) pour atteindre le modèle déchiffré. On comprend que le modèle « intermédiaire » (i.e. le troisième maillage) entre les deux transformations ne représente pas encore l'objet graphique supplémentaire.

On peut tout à fait avoir plus de deux transformations élémentaires, et alors on aurait un quatrième maillage ne représentant toujours pas ledit objet graphique tridimensionnel, et en fait la deuxième transformation élémentaire, transformerait ledit ensemble de points définissant le troisième maillage en l'ensemble de point définissant le quatrième maillage avant qu'une troisième transformation élémentaire, ne transforme ledit ensemble de points définissant le quatrième maillage en l'ensemble de point définissant le premier maillage, etc. De manière générale, la i-ème et « dernière » transformation élémentaire transforme l'ensemble de points définissant le i+1-ème maillage en l'ensemble de point définissant le premier maillage.

Chaque transformation élémentaire peut, ou non être elle-même paramétrisée par la clé privée de déchiffrement de l'objet.

De manière préférée on a une seule transformation élémentaire paramétrisée par la clé privée de déchiffrement de l'objet, en particulier la première, et les autres (deuxième et éventuelles suivantes) ne sont pas paramétrisée par la clé privée de déchiffrement de l'objet. En d'autres termes, l'étape (b) comprend en outre l'application d'une deuxième transformation géométrique élémentaire au résultat de la première transformation élémentaire paramétrisée par ladite clé privée de déchiffrement, ledit modèle déchiffré étant le résultat de la transformation géométrique supplémentaire.

La première transformation élémentaire est typiquement ladite transformation linéaire et la deuxième est donc d'une autre nature, mais ce pourrait tout à fait être une autre transformation linéaire avec une matrice de transformation construite d'une autre façon.

De manière avantageuse, ladite deuxième transformation élémentaire est une transformation de brouillage (dite de « jittering ») dans laquelle chaque cordonnée spatiale de chaque point définissant le troisième maillage est multiplié par une fonction périodique paramétrisée par une normale au troisième maillage en ledit point (i.e. les coordonnées du vecteur localement orthogonal au maillage). L'objectif de la transformation de jittering est que deux objets graphiques tridimensionnels qui auraient des clés proches se retrouvent avec des modèles chiffrés quand même éloignés.

On pourra par exemple multiplier chaque cordonnée spatiale du vecteur $V_3$ (point du troisième maillage) chaque cordonnée spatiale par $\lambda_{X,Y,Z}=(a+f(n_{X,Y,Z}(V_3)*w)$ où a est un coefficient positif et préférentiellement supérieur à 1 (par exemple 1.1), f une fonction trigonométrique telle que sinus ou cosinus, $n_{X,Y,Z}(V_3)$ les trois coordonnées de la normale en le point, w une constante de valeur élevée (avantageusement au moins 100, voire 1000) pour avoir un brouillage à haute fréquence.

On comprend qu'aussi bien la transformation linéaire que la transformation de brouillage peut être réalisées par une carte graphique sans consommation supplémentaire de ressources. De plus la combinaison de la transformation linéaire et de la transformation de brouillage est optimale d'un point de vue offuscation : la transformation de brouillage travaille « localement » et vient amplifier la déformation causée par la transformation linéaire. De surcroît, elle n'a pas besoin d'être paramétrisée par la clé privée de déchiffrement de l'objet, et peut être précalculée ce qui augmente encore son efficacité.

*Chiffrement*

De manière préférée, un modèle initial dudit objet graphique tridimensionnel est stocké par le serveur 2.

Le procédé comprend alors une étape préalable (a0), mise en oeuvre par des moyens de traitement de données 21 du serveur 2, d'application au modèle initial d'au moins une transformation géométrique inverse de ladite transformation géométrique paramétrisée par la clé privée de déchiffrement associée audit objet graphique tridimensionnel, de sorte à obtenir le modèle chiffré dudit objet graphique tridimensionnel.

On comprend que le modèle déchiffré est logiquement identique au modèle initial (si la clé de déchiffrement a été correctement appliquée).

Si la transformation géométrique comprend plusieurs transformations élémentaires, celles-ci doivent être appliquées dans l'ordre inverse pour le chiffrement (d'abord l'inverse de la deuxième transformation élémentaire puis l'inverse de la première transformation élémentaire.

Une transformation linéaire est inversible en inversant la matrice de transformation : si $V_2=V_2*inv(M)$, alors $V_2=V_2*inv(inv(M))=V_2*M$. Une transformation de brouillage consiste à multiplier chaque coordonnée par un scalaire donc on peut facilement également l'inverser également.

De manière préférée, l'étape (a0) comprend la génération préalable de la clé privée de déchiffrement, par exemple aléatoirement, et sa transmission à l'utilisateur s'il est autorisé.

Typiquement, l'étape (a0) est déclenchée par la requête par l'utilisateur dudit objet graphique tridimensionnel auprès du serveur 2, par exemple après un achat : l'utilisateur sélectionner l'objet graphique tridimensionnel, le serveur 2 génère alors la clé privée et la transmet à l'utilisateur, et génère le modèle chiffré de cet objet graphique tridimensionnel pour cette clé privée, et le transfère soit directement à l'utilisateur, soit à un serveur de contenu 3 pour téléchargement à la demande par l'utilisateur de manière asynchrone.

Dans un mode encore plus sécurisé, chaque clé privée peut avoir une durée de vie, voire une utilisation unique, et si le résultat de la vérification de la clé à l'étape (a) montre qu'elle est valide mais périmée, dans une nouvelle occurrence de l'étape (a0) à la volée le serveur 2 régénère une nouvelle clé privée, la transmet à l'utilisateur ; et régénère un modèle chiffré dudit objet graphique tridimensionnel, soit à partir du modèle initial soit en déchiffrant l'ancien modèle chiffré avec l'ancienne clé.

*Empreinte numérique*

Selon un mode de réalisation préférée, l'étape (a0) comprend préalablement l'application d'une empreinte numérique unique, ou « fingerprinting », audit modèle initial avant chiffrement. En effet, le même objet graphique tridimensionnel pourrait être chiffré pour plusieurs utilisateurs, et l'idée est de personnaliser le modèle chiffré, voire de pouvoir vérifier la clé.

Typiquement, ladite clé privée de déchiffrement est celle d'un utilisateur autorisé par le serveur 2 à afficher ledit objet graphique tridimensionnel, ladite empreinte numérique unique étant l'empreinte numérique dudit utilisateur, par exemple un haché, ou « hash » (c'est-à-dire le résultat de l'application d'une fonction de hachage cryptographique) de la clé privée. On comprend que ladite empreinte numérique est elle-même chiffrée par la transformation géométrique inverse appliquée lors de l'étape (a0).

Divers techniques de fingerprinting peuvent être utilisées. En particulier, l'application d'une empreinte numérique audit modèle initial peut comprendre l'insertion d'un identifiant unique (le haché) dans des métadonnées dudit modèle initial ou l'ajout au modèle initial d'un maillage géométrique invisible unique (les indices des faces de ce maillage invisibles sont fonction de la clé privée).

*Procédé de chiffrement, et produit programme d'ordinateur*

Selon un deuxième aspect, l'invention concerne le procédé de chiffrement, i.e. l'étape (a0), de manière séparée. En effet, comme expliqué des clés peuvent être pré-générés et des modèles chiffrés calculés et stockés par exemple sur le serveur de contenus 3.

Ainsi, ledit procédé de chiffrement d'un modèle initial d'un objet graphique tridimensionnel, comprend la mise en oeuvre, par les moyens 21 de traitement de données du serveur de contrôle 2 de l'étape (a0) d'application au modèle initiale d'au moins une transformation géométrique inverse d'une transformation paramétrisée par une clé privée de déchiffrement associée audit objet graphique tridimensionnel, de sorte à obtenir un modèle chiffré dudit objet graphique tridimensionnel.

Selon un troisième et un quatrième aspect, l'invention concerne un produit programme d'ordinateur comprenant des instructions de code pour l'exécution (en particulier sur les moyens de traitement de données 11a, 11b de l'équipement ou les moyens 21 du serveur de contrôle 2) d'un procédé selon le premier aspect de l'invention d'affichage sur une interface de sortie 13 d'un équipement informatique 1 d'un objet graphique tridimensionnel ou selon le deuxième aspect de chiffrement d'un modèle initial d'un objet graphique tridimensionnel, ainsi que des moyens de stockage lisibles par un équipement informatique (une mémoire 12 de l'équipement 1 ou une mémoire 22 du serveur 2) sur lequel on trouve ce produit programme d'ordinateur.

**Revendications**

1. Procédé d'affichage sur une interface de sortie (13) d'un équipement informatique (1) d'un objet graphique tridimensionnel, **caractérisé en ce qu'**il comprend la mise en oeuvre, par des moyens (11a, 11b) de traitement de données d'un équipement informatique (1) d'étapes de :

   (a) Obtention d'un modèle chiffré dudit objet graphique tridimensionnel, un modèle déchiffré dudit objet graphique tridimensionnel étant un premier maillage géométrique représentant ledit objet graphique tridimensionnel, et ledit modèle chiffré dudit objet graphique tridimensionnel étant un deuxième maillage géométrique ne représentant pas ledit objet graphique tridimensionnel, chaque maillage géométrique étant consisté de faces et étant défini par un ensemble de points formant sommets desdites faces ;

(b) Application au modèle chiffré d'au moins une transformation géométrique paramétrisée par une clé privée de déchiffrement associée audit objet graphique tridimensionnel qui transforme ledit ensemble de points définissant le deuxième maillage en l'ensemble de point définissant le premier maillage, de sorte à obtenir un modèle déchiffré dudit objet graphique tridimensionnel ; ladite transformation géométrique comprenant une transformation linéaire dans laquelle le vecteur des cordonnées spatiales de chaque point définissant le deuxième maillage est multiplié par une matrice de transformation 3x3 fonction de ladite clé privée de déchiffrement ;
(c) Mise en oeuvre d'un algorithme de rendu dudit modèle déchiffré.

2. Procédé selon la revendication 1, dans lequel ladite matrice de transformation est une matrice à diagonale strictement dominante normalisée.

3. Procédé selon l'une des revendications 1 et 2, dans lequel ladite transformation linéaire est une première transformation élémentaire, transformant ledit ensemble de points définissant le deuxième maillage en un ensemble de point définissant un troisième maillage ne représentant pas ledit objet graphique tridimensionnel ; la transformation géométrique comprenant en outre une deuxième transformation élémentaire, transformant ledit ensemble de points définissant le troisième maillage en l'ensemble de point définissant le premier maillage.

4. Procédé selon la revendication 3, dans lequel ladite deuxième transformation élémentaire est une transformation de brouillage dans laquelle chaque cordonnée spatiale de chaque point définissant le troisième maillage est multiplié par une fonction périodique paramétrisée par une normale au troisième maillage en ledit point.

5. Procédé selon l'une des revendications 1 à 4, dans lequel lesdits moyens de traitement de données (11a, 11b) de l'équipement (1) comprennent un processeur (11a) et une carte graphique (11b), les étapes (b) et (c) étant réalisées à la volée par la carte graphique (11b).

6. Procédé selon l'une des revendications 1 à 5, dans lequel un modèle initial dudit objet graphique tridimensionnel est stocké par un serveur (2) connecté audit équipement informatique (1), le procédé comprenant une étape préalable (a0), mise en oeuvre par des moyens de traitement de données (21) du serveur (2), d'application au modèle initial d'au moins une transformation géométrique inverse de ladite transformation géométrique paramétrisée par la clé privée de déchiffrement associée audit objet graphique tridimensionnel, de sorte à obtenir le modèle chiffré dudit objet graphique tridimensionnel ; l'étape (a) comprenant la transmission dudit modèle chiffré du serveur (2) à l'équipement (1).

7. Procédé selon la revendication 6, dans lequel l'étape (a0) comprend préalablement l'application d'une empreinte numérique unique audit modèle initial.

8. Procédé selon la revendication 7, dans lequel ladite clé privée de déchiffrement est celle d'un utilisateur autorisé par le serveur (2) à afficher ledit objet graphique tridimensionnel, ladite empreinte numérique unique étant l'empreinte numérique dudit utilisateur.

9. Procédé selon l'une des revendications 7 et 8, dans lequel l'application d'une empreinte numérique audit modèle initial comprend l'insertion d'un identifiant unique dans des métadonnées dudit modèle initial ou l'ajout au modèle initial d'un maillage géométrique invisible unique.

10. Procédé de chiffrement d'un modèle initial d'un objet graphique tridimensionnel, le modèle initial dudit objet graphique tridimensionnel étant un premier maillage géométrique représentant ledit objet graphique tridimensionnel, et un modèle chiffré dudit objet graphique tridimensionnel étant un deuxième maillage géométrique ne représentant pas ledit objet graphique tridimensionnel, chaque maillage géométrique étant consisté de faces et étant défini par un ensemble de points formant sommets desdites faces, **caractérisé en ce qu'**il comprend la mise en oeuvre, par des moyens (21) de traitement de données d'un serveur (2) d'étapes de :
(a0) Application au modèle initial d'au moins une transformation géométrique inverse d'une transformation paramétrisée par une clé privée de déchiffrement associée audit objet graphique tridimensionnel qui transforme ledit ensemble de points définissant le deuxième maillage en l'ensemble de point définissant le premier maillage, de sorte à obtenir ledit modèle chiffré dudit objet graphique tridimensionnel ; ladite transformation géométrique comprenant une transformation linéaire dans laquelle le vecteur des cordonnées spatiales de chaque point définissant le deuxième maillage est multiplié par une matrice de transformation 3x3 fonction de ladite clé privée de déchiffrement.

**11.** Produit programme d'ordinateur comprenant des instructions de code pour l'exécution d'un procédé selon l'une des revendications 1 à 9 d'affichage sur une interface de sortie (13) d'un équipement informatique (1) d'un objet graphique tridimensionnel ou selon la revendication 10 de chiffrement d'un modèle initial d'un objet graphique tridimensionnel, lorsque ledit programme est exécuté sur un ordinateur.

**12.** Moyen de stockage lisible par un équipement informatique sur lequel est enregistré un produit programme d'ordinateur comprenant des instructions de code pour l'exécution d'un procédé selon l'une des revendications 1 à 9 d'affichage sur une interface de sortie (13) d'un équipement informatique (1) d'un objet graphique tridimensionnel ou selon la revendication 10 de chiffrement d'un modèle initial d'un objet graphique tridimensionnel.

**FIG. 1**

(a0)

| Fingerprinting |
|---|
| Génération clé<br>Chiffrement du modèle initial |

(a)

| Obtention du modèle chiffré |
|---|

(b)

| Première transformation élémentaire |
|---|
| Deuxième transformation<br>élémentaire |

(c)

| Rendu |
|---|

**FIG. 2**

Europäisches
Patentamt

European
Patent Office

Office européen
des brevets

# RAPPORT DE RECHERCHE EUROPEENNE

**Numéro de la demande**

**EP 23 20 5400**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2012/299915 A1 (ELUARD MARC [FR] ET AL) 29 novembre 2012 (2012-11-29) <br> * alinéa [0020] * <br> * alinéa [0015] – alinéa [0017] * <br> * alinéa [0047] – alinéa [0048] * | 1-12 | INV. <br> G06F21/62 <br> H04L9/40 |
| A | US 2017/169232 A1 (LELABOURIER MARC [FR] ET AL) 15 juin 2017 (2017-06-15) <br> * alinéa [0002] * <br> * alinéa [0037] – alinéa [0039] * <br> * alinéa [0041] – alinéa [0043] * <br> * alinéa [0045] – alinéa [0046] * | 1-12 | |
| A | US 2016/110564 A1 (TSANG PETER WAI MING [HK]) 21 avril 2016 (2016-04-21) <br> * alinéa [0029] – alinéa [0030] * | 1-12 | |
| A | US 11 074 703 B1 (MONAGHAN ROBERT [US] ET AL) 27 juillet 2021 (2021-07-27) <br> * colonne 4, ligne 59 – colonne 5, ligne 22 * <br> * colonne 3, ligne 3 – ligne 18 * | 1-12 | DOMAINES TECHNIQUES RECHERCHES (IPC) <br><br> G06F |
| X | JOLFAEI ALIREZA ET AL: "A 3D Object Encryption Scheme Which Maintains Dimensional and Spatial Stability", IEEE TRANSACTIONS ON INFORMATION FORENSICS AND SECURITY, IEEE, USA, vol. 10, no. 2, 1 février 2015 (2015-02-01), pages 409-422, XP011569789, ISSN: 1556-6013, DOI: 10.1109/TIFS.2014.2378146 [extrait le 2015-01-13] <br> * abrégé * <br> * page 1 – page 2 * <br> * page 5 * | 1-12 | |

Le présent rapport a été établi pour toutes les revendications

| Lieu de la recherche | Date d'achèvement de la recherche | Examinateur |
|---|---|---|
| Munich | 22 février 2024 | Medvesan, Oana |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 23 20 5400

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-02-2024

| Document brevet cité au rapport de recherche | | Date de publication | Membre(s) de la famille de brevet(s) | | Date de publication |
|---|---|---|---|---|---|
| US 2012299915 | A1 | 29-11-2012 | CN | 102855657 A | 02-01-2013 |
| | | | EP | 2528266 A1 | 28-11-2012 |
| | | | EP | 2528267 A2 | 28-11-2012 |
| | | | JP | 5886130 B2 | 16-03-2016 |
| | | | JP | 2012243319 A | 10-12-2012 |
| | | | US | 2012299915 A1 | 29-11-2012 |
| US 2017169232 | A1 | 15-06-2017 | EP | 3182396 A1 | 21-06-2017 |
| | | | US | 2017169232 A1 | 15-06-2017 |
| US 2016110564 | A1 | 21-04-2016 | AUCUN | | |
| US 11074703 | B1 | 27-07-2021 | US | 10853955 B1 | 01-12-2020 |
| | | | US | 10964035 B1 | 30-03-2021 |
| | | | US | 11074703 B1 | 27-07-2021 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012299915 A
- US 2017169232 A